(19) Europäisches Patentamt / European Patent Office / Office européen des brevets

(11) **EP 3 104 029 A1**

(12) **EUROPEAN PATENT APPLICATION**
published in accordance with Art. 153(4) EPC

(43) Date of publication:
**14.12.2016 Bulletin 2016/50**

(21) Application number: **15746685.5**

(22) Date of filing: **06.02.2015**

(51) Int Cl.:
*F16C 33/20* *(2006.01)*        *B22F 3/24* *(2006.01)*
*B22F 5/00* *(2006.01)*

(86) International application number:
**PCT/JP2015/053335**

(87) International publication number:
**WO 2015/119231 (13.08.2015 Gazette 2015/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.02.2014 JP 2014021718**
**06.02.2014 JP 2014021726**

(71) Applicant: **NTN Corporation**
**Osaka-shi, Osaka 550-0003 (JP)**

(72) Inventors:
• **YOSHIZUKA, Noriyoshi**
**Ama-gun**
**Aichi 497-8541 (JP)**
• **YASHIRO, Naoki**
**Kuwana-shi**
**Mie 511-0867 (JP)**
• **OOHIRA, Kouya**
**Kuwana-shi**
**Mie 511-0867 (JP)**
• **ISHII, Takuya**
**Kuwana-shi**
**Mie 511-8678 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(54) **PLAIN BEARING**

(57)    Provided is a sliding bearing that can keep the price low while maintaining a bearing property over a long period. The sliding bearing is a sliding bearing 1 having a bearing periphery portion 2 formed of a metal base material, and a resin layer 3 formed on a surface to be a sliding surface of the bearing periphery portion, wherein the metal base material is an unsintered green compact formed by compacting a raw material powder containing a metal powder capable of forming an oxide film as a major raw material, and the oxide film has been formed between particles of the metal powder by means of steam treatment or the like, and the unsintered green compact has a radial crushing strength of more than 100 MPa.

Fig. 1
(a)
(b)

**Description**

TECHNICAL FIELD

The present invention relates to a sliding bearing, and specifically relates to a sliding bearing in which a resin layer has been formed on a sliding surface of a base material formed of a predetermined metal green compact.

BACKGROUND ART

In recent years, various considerations are made as to bearings. For example, a rolling bearing constituted by retaining plural rolling members between inner and outer rings via a retainer, and by further forming a lubricant film at a film thickness of from 0.03 to 20 $\mu$m on each of the orbital planes of the inner and outer rings and the surfaces of the rolling members, wherein a lubricating oil holder containing a lubricating oil having compatibility with a base oil that constitutes a lubricant film by 10% by weight or more of the total weight, and having a consistency that is higher than consistency No. 3 defined in JIS K2220 is disposed on a suitable place of the retainer so that the lubricating oil holder accounts for from 1 to 10% by volume ratio of the bearing space, and is not brought into contact with the orbital planes of the inner and outer rings and the surfaces of the rolling members, is suggested (see Patent Document 1).

PRIOR ART DOCUMENTS

PATENT DOCUMENT

Patent Document 1: JP H08-303467 A

SUMMARY OF THE INVENTION

PROBLEM TO BE SOLVED BY THE INVENTION

In the rolling bearing of Patent Literature 1, during the production steps thereof, a step of film-forming a lubricant film at a film thickness of from 0.03 to 20 $\mu$m on the orbital planes of the inner and outer rings and the surfaces of the rolling members is required. Furthermore, in addition to this step, a method for disposing a lubricating oil holder on a suitable place of the retainer so that the lubricating oil holder accounts for 1 to 10% by volume ratio of the bearing space, and is not brought into contact with the orbital planes of the inner and outer rings and the surfaces of the rolling members is required.

In the case where such rolling bearing is intended to be produced, it is conjectured that complex steps increase in the method for producing the rolling bearing, and the productivity decreases due to the management and the like of the complex steps, and consequently, it becomes difficult to keep the price of the rolling bearing low. Furthermore, even if complex steps are added, a significant effect to elongate the lifetime cannot be expected, and an excessive rolling quality is also concerned depending on sites on which the bearing is to be used.

Furthermore, further price reduction on rolling bearings is required from the market, and thus a sliding bearing with a significantly decreased number of parts is being required so as to respond to this request. Meanwhile, in the case where a general sintered metal base material is used in a part of a sliding bearing, the step for sintering the base material accounts for a quarter to a half of the production cost of the base material, and the subsequent sizing step is also essential. Therefore, in order to further reduce the cost of the entirety of the bearing, it is required to further decrease the production cost while retaining a sufficient strength in the base material.

Furthermore, in the case where a sliding bearing is used as an alternate of a rolling bearing, the fungible scope thereof significantly depends on a PV value (a value obtained by multiplying a contact pressure(a pressure of contact surface) (P) by a sliding velocity (V)) to which the sliding bearing can corresponds, and about 20% can be substituted at a degree of more than 5 MPa·m/min, and about 85% can be substituted at 15 MPa·m/min or more. Therefore, a sliding bearing as an alternate of a rolling bearing is required to have a stable bearing property such that the sliding bearing maintains a low friction coefficient for a long period, whereas the sliding bearing can correspond to a high PV value, and the like.

The present invention was made so as to handle such problems, and aims at providing a sliding bearing that can keep the price low while maintaining a bearing property over a long period.

MEANS FOR SOLVING THE PROBLEM

The sliding bearing of the present invention is a sliding bearing having a metal base material, and a resin layer formed by using a resin material on a surface to be a sliding surface of the base material, wherein the metal base material is an unsintered green compact formed by compacting a raw material powder containing a metal powder capable of forming an oxide film as a major raw material, and the oxide film has been formed between particles of the metal powder.

The green compact has a green density by a size measurement method in the range of from 5.0 to 7.6 g/cm$^3$. Furthermore, the green compact has a radial crushing strength of more than 100 MPa.

The oxide film has been formed by a steam treatment.

The resin material is a material containing an injection-moldable polyethylene (PE) resin as a major component and containing a non-injection-moldable resin, and the resin layer has been integrally molded on the base material by using the material by injection molding.

In an embodiment of the resin layer, the non-injection-moldable resin is a fluorine resin, and the fluorine resin is contained in the resin material by more than 10% by mass and 40% by mass or less with respect to the total mass of the PE resin and the fluorine resin. Furthermore, the fluorine resin is a recycled polytetrafluoroethylene (PTFE) resin. Furthermore, the fluorine resin has been incorporated in a powdery shape having an average particle diameter of from 5 to 50 $\mu$m in the resin material. Incidentally, this average particle diameter is a measured value by a laser diffractometry. Furthermore, the PE resin has a MFR measured under a load of 10 kg at 190°C based on JIS K 7210 of from 1 to 30 g/10 min.

In another embodiment of the resin layer, the non-injection-moldable resin is an ultrahigh molecular weight polyethylene (UHMWPE) resin, and the UHMWPE resin is contained in the resin material by from 5 to 30% by mass with respect to the total mass of the PE resin and the UHMWPE resin. Furthermore, the resin material in this embodiment contains a porous silica and a lubricant.

The sliding bearing is characterized by being a bearing that is used under a condition wherein a PV value obtained by multiplying a contact pressure (P) by a sliding velocity (V) is more than 5 MPa·m/min.

EFFECT OF THE INVENTION

Since the sliding bearing of the present invention has a metal base material, and a resin layer formed by using a resin material on a surface to be a sliding surface of the base material, wherein the metal base material is an unsintered green compact formed by compacting a raw material powder containing a metal powder capable of forming an oxide film as a major raw material, and the oxide film has been formed between particles of the metal powder, the production costs of the metal base material can be decreased while retaining a sufficient strength that can withstand practical use as a sliding bearing. Furthermore, since a resin layer by a resin material has been formed on a surface to be a sliding surface of the base material, sliding between the surface and a mating member is smoothly conducted. Furthermore, the number of parts is decreased more than that of a rolling bearing. As the results of these, it becomes possible to keep the price of the entirety of the bearing low while maintaining the bearing property over a long period.

Furthermore, since the resin material that forms the resin layer is a material containing an injection-moldable PE resin as a major component and containing a non-injection-moldable resin, and the resin layer has been integrally formed with the metal base material by using the material by injection molding, a low friction coefficient can be maintained over a long period even at a high PV condition, and the antiwearing property is excellent. Furthermore, since the resin layer is molded by insert injection molding, complex production steps are unnecessary, and thus the productivity is excellent and the the price can further be decreased. As the results of these, the sliding bearing of the present invention is expected as an alternate of a rolling bearing in many applications.

BRIEF DESCRIPTION OF DRAWINGS

Fig. 1 is a perspective view and a cross-sectional view, which show an example of the sliding bearing of the present invention.
Fig. 2 is a cross-sectional view showing an embodiment of the structure of the resin layer formed on the outer periphery part of the bearing.
Fig. 3 is a drawing showing the relationship between the PV value and the wearing coefficient.

DESCRIPTION OF EMBODIMENTS

The sliding bearing of the present invention has a metal base material, and a resin layer formed by using a resin material on a surface to be a sliding surface of the base material, wherein the metal base material is an unsintered green compact formed by compacting a raw material powder containing a metal powder capable of forming an oxide film as a major raw material, and the oxide film has been formed between particles of the metal powder. The "resin layer" in the sliding bearing of the present invention is a layer containing a resin (a synthetic polymer) as a major component, and may contain a filler and the like other than the resin in a part of the resin layer. By forming the resin layer on the sliding surface, sliding with a mating member such as a shaft can be conducted smoothly.

The metal base material that forms the sliding bearing of the present invention will be explained.

In the field of powder metallurgy, generally, a raw material powder represented by a metal powder is mixed, subjected to compacted powder molding, and sintered in a furnace at a high temperature of more than 800°C to give a product. In contrast, the metal base material in the present invention is an unsintered (sinterless) green compact that is a molded metal powder itself, and thus is distinguished from a sintered form that has further undergone a sintering step.

The present inventors focused on a steam treatment. Generally, a steam treatment is also called as a homo-treatment, and the treatment includes reacting a Fe-based sintered material (a sintered product) with water vapor in an oxidation atmosphere while heating the sintered material to about 500 to 560°C, whereby a coating of triiron tetraoxide ($Fe_3O_4$) is formed on the surface. The coating thickness thereof is said to be about 3 to 7 $\mu$m. Although the number of examples in which the steam treatment is applied to a general steel material is small, the steam treatment is deemed to be an inexpensive surface treatment on sintered metals. The major purposes of the treatment are three: anti-rusting, improvement of antiwearing property, and closing of pores, and the treatment is also deemed to be effective for the improvement of surface hardness and machinability.

In the present invention, the metal base material is produced by the following method. Specifically, a raw material powder containing a metal powder capable of forming an oxide film as a major raw material is subjected to compacting to give a green compact, and an oxide film is formed by a steam treatment between particles of the metal powder constituting the green compact. By this way, a green compact that is sinterless but has a high strength green compact was obtained. Specifically, the strength can further be increased by optimizing the materials and density of the green compact that constitutes the metal base material, the conditions for the steam treatment, and the like. The high strength herein refers to a level that can withstand practical use as a sliding bearing, not the improvement of the chipping resistance of the green compact or a strength that is similar to the strength of a soft magnetic material part, and specifically refers to a radial crushing strength of 100 MPa or more (JIS Z 2507 "Sintered Bearing - Radial Crushing Strength Test Method").

In a conventional sintered body, a raw material powder is subjected to compacted powder molding by a uniaxial pressing or the like, and heated to a high temperature of the melting point or less (800 to 1,300°C in the case of a Fe-based metal powder) to form necking among particles, whereby the strength is increased. In contrast, in the present invention, an oxide film is formed on the surface of a metal powder by having a green compact having a predetermined density in an oxide atmosphere react with water vapor at a temperature lower than the above-mentioned temperature. In the case of a Fe-based metal powder, the temperature of the steam treatment is about 400 to 700°C, preferably 400 to 550°C. The oxide is triiron tetraoxide ($Fe_3O_4$) in the case where the Fe-based metal powder is used as the raw material powder. The oxide film formed between the particles of the raw material powder substitutes for the role of necking in powder body particles, and consequently, the strength of the green compact is increased. Furthermore, since the metal powder is coated with the oxide film after the steam treatment, the anti-rusting treatment becomes unnecessary.

Since the treatment temperature is lower than that in a general sintering step, the change in size is small ($\pm$ 0.1% or less before and after the treatment). Therefore, it becomes possible to omit a sizing step, which has been conventionally required so as to correct the size after conventional sintering. Furthermore, it becomes easy to design a sliding bearing and a mold for compacted powder molding. Furthermore, since the treatment temperature is low, the (electric or thermal) energy required for the treatment can be reduced, and the treatment step can also be cut, and thus it becomes possible to shorten the step for the production of the metal base material and to reduce the price. In addition, the steam treatment is a treatment in an atmosphere, and thus can be applied irrespective of the shape and the variation in size of the metal base material.

Although uniaxial pressing is exemplified as a representative example of the means for powder pressurization of the green compact, it is possible to apply as long as the metal base material that can form an oxide film is exposed. Specifically, the powder can also be subjected to molding by multishaft CNC press, injection molding (MIM), and further additional cold isostatic pressurization (CIP) molding, or the like, and the means for the powder compaction molding do not matter as long as the powder has been packed.

In general, during powder compaction molding, in order to secure the lubrication between the powder to be molded and the mold, and the powder and the powder, a lubricant powder such as a metal soap, an amide wax or the like is mixed, and the lubricant powder remains in the green compact. In a conventional means, the lubricant component is decomposed and thus is not included in the sintered metal base material because a high temperature is retained in the subsequent sintering step. However, in the case where the present invention is applied, the lubricant component may remain depending on the density of the green compact, the treatment temperature and the retention time. Therefore, it is desirable to use a means such as providing a degreasing step for decomposing and removing the lubricant component in advance prior to the steam treatment, and continuously conducting the steam treatment after the degreasing step. However, it has been already confirmed that the strength can be increased even if the steam treatment is conducted with containing the lubricant without providing a degreasing step.

Generally, strength is more improved at a higher density in a sintered body. On the other hand, if the green density is too high, the strength is improved, but it is not preferable since water vapor cannot enter into the inside of the green compact, and thus the formation of the oxide film is limited to only the surface layer of the green compact. However, if the green density is too low, there are concerns that chipping and cracking are generated during handling (the rattler value is high), and that the distance between the particles is too long, and thus the oxide film is not formed over the particles. For the above-mentioned reasons, it is preferable that the green density be set to be in the scope from 5.0 to 7.6 $g/cm^3$, preferably from 5.3 to 7.2 $g/cm^3$, more preferably from 6.0 $g/cm^3$ or more and lower than 7.0 $g/cm^3$. The green density is by the size measurement method.

As to the material for the metal base material (green compact), any material can be applied as long as it can form an oxide film. Accordingly, as the metal powder to be the major raw material is not limited to Fe-based metals, and Cu-based metals, Fe-Cu-based metals and the like can also be applied, and C, Zn and Sn may also be incorporated as other components. Furthermore, a material that is an aluminum-based metal and contains Cu, Mg and Si can also be applied. In addition, as to the method for producing the metal powder, an atomizing process, a reduction process, a stamp process, a carbonyl process and the like are known, and any method for producing the metal powder can be applied in the present invention.

In the case where a sliding bearing that has excellent mechanical strength and durability together with high size accuracy and rotation accuracy is to be obtained, a Fe-based metal powder is preferable. The "Fe-based" herein means that the content of Fe is 90% or more by mass ratio. As long as this condition is satisfied, other components such as Cu, Sn, Zn, C and the like may also be contained. Furthermore, "Fe" also includes stainless. The Fe-based metal powder is obtained, for example, as follows: a raw material metal powder containing Fe by the above-mentioned content (a small amount of a binder may also be added so as to improve the moldability and mold releasability) is subjected to powder compaction molding in a predetermined shape, degreased, and subjected to a steam treatment to give, for example, a solid body. For example, where necessary, the obtained solid body may be subjected to a post treatment such as sizing. There are many inner fine pores by a porous tissue in the metal solid body (metal base material), and there are many surface openings formed by opening of the inner fine pores outward on the surface of the metal solid body. The inner fine pores can be impregnated with a lubricating oil by means of, for example, vacuum impregnation.

The resin layer that constitutes the sliding bearing of the present invention will be explained.

This resin layer is formed by using a resin material on a surface to be a sliding surface of the metal base material. For example, a method including integrally molding the resin layer with the metal base material, and a method including molding the resin layer as a single body and then fixing the resin layer on the metal base material (by press-fitting, fitting, adhesion or the like) can be adopted. It is preferable to dispose the metal base material in advance in a mold for injection molding, and then integrally molding the resin layer by injection molding by using the above-mentioned resin material on the surface to be a sliding surface (insert molding), since it is possible to form the resin layer with fine tight adhesibility to the metal base material, which is a green compact.

The resin material used as the material can be optionally determined depending on the properties required by the resin layer. Examples of the synthetic resin as the major component of the resin material include polyamide (PA) resins such as polyamide 6 (PA6) resin, polyamide 6-6 (PA66) resin, polyamide 6-10 (PA610) resin, polyamide 6-12 (PA612) resin, polyamide 4-6 (PA46) resin, polyamide 9-T (PA9T) resin, polyamide 6-T (PA6T) resin and polymetaxylene adipamide (polyamide MXD-6) resin; polycarbonate (PC) resins; polyacetal (POM) resins; wholly aromatic polyester resins; polyphenylene sulfide (PPS) resins; polyether ether ketone (PEEK) resins; polyamideimide (PAI) resins; polyetherimide (PEI) resins; injection-moldable polyimide (PI) resins; injection-moldable fluorine resins (polyfluoride olefin-based resins) such as polytetrafluoroethylene-perfluoroalkyl vinyl ether copolymer (PFA) resin, tetrafluoroethylene-hexafluoropropylene copolymer (FEP) resin and ethylene-tetrafluoroethylene copolymer (ETFE) resin; and olefin-based resins such as injection-moldable PE resin; and the like. In each polyamide resin, the number represents the carbon number between the amide bonds, and T represents a telephthalic acid residue. These respective synthetic resins may be used singly or as a polymer alloy in which two or more kinds are mixed.

Among these, it is preferable to use a material containing an injection-moldable PE resin as the major component and containing a non-injection-moldable resin, and to integrally mold a resin layer with the metal base material by using the above-mentioned material by means of injection molding. The non-injection-moldable resin acts as a filler, and thus improvement of the antiwearing property, and the like can be achieved. Examples of the non-injection-moldable resin include polytetrafluoroethylene (PTFE) resins, which are fluorine resins, non-injection-moldable ultrahigh molecular weight polyethylene (UHMWPE) resins, and the like.

The case when the resin material that forms the resin layer contains an injection-moldable PE resin (A) as a major component, and a PTFE resin (B1), which is a non-injection-moldable fluorine resin, by predetermined amounts, will be explained below.

The PE resin (A) as the major component of the resin material may be any injection-moldable PE resin. The conditions for injection molding may be, for example, conditions that allow injection molding at a molding temperature of from 200°C to 270°C and an injection pressure of from 100 to 160 MPa. Furthermore, a high density-high molecular weight PE resin, which is excellent in various properties such as antiwearing property, self-lubricating property, impact resistance, chemical resistance, light weight being lighter than the specific gravity of water, and size stability due to low water absorbability, is preferable. For example, a high density PE resin having a density (ASTM D 1505) of 942 kg/m$^3$ or more is preferable, and the upper limit value of the density of the high density PE resin is lower than 1,000 kg/m$^3$, and is 980 kg/m$^3$ or less in a precise sense.

The MFR (melt flow rate: JIS K 7210 (190°C, 10 kgf)) of the PE resin (A) is preferably from 1 to 30 g/10 min, more preferably from 1 to 15 g/10 min, specifically preferably from 2 to 6 g/10 min. The weight average molecular weight is lower than 1,000,000, preferably from about 250,000 to 950,000. Furthermore, the structure may be a linear structure, or a branched structure containing branching of methyl groups. The PE resin as the component (A) may be used singly or by mixing two or more kinds.

Commercially available products of the PE resin (A) that can be used in the present invention include Lubmer (trade name) L3000 (density: 969 kg/m$^3$, MFR: 15 g/10 min), Lubmer L4000 (density: 967 kg/m$^3$, MFR: 6 g/10 min) and Lubmer L5000 (density: 966 kg/m$^3$, MFR: 2 g/10 min) manufactured by Mitsui Chemicals, Inc., and the like.

The PTFE resin (B1) incorporated in the resin material is a non-injection-moldable fluorine resin. The PTFE resin is a crystalline thermoplastic resin, and the melting point is generally deemed as 327°C for the sake of convenience, but unlike general thermoplastic resins that have an extremely high melt viscosity of 10$^{11}$ poise even at 380°C and have a melt viscosity during molding of from 10$^3$ to 10$^4$ poise, melt molding processes such as injection molding cannot be applied. Therefore, a molding process in which a powdery shape resin is preliminarily molded and heated to 360 to 390°C, which is equal to or more than the melting point of the resin, and the particles are sintered, is mainly adopted to the PTFE resin. In this embodiment, the PTFE resin (B1) is incorporated not as the major component of the resin layer formed by injection molding but as a filler (powdery shape) for the PE resin as a base. By incorporating the PTFE resin (B1), reduction of friction can be achieved, heat generation by friction is alleviated, and an excellent friction wearing property is provided even under a high load, under a dry environment that is not mediated by a lubricating oil or a grease on the sliding surface.

As the PTFE resin, a general PTFE resin represented by -(CF$_2$-CF$_2$)$_n$- can be used, and modified PTFE resins obtained by introducing a perfluoroalkyl ether group (-CpF$_{2p}$-O-) (p is an integer of 1-4) or a polyfluoroalkyl group (H(CF$_2$)$_q$-) (q is an integer of 1-20) or the like in a general PTFE resin can also be used.

As the PTFE resin, any of a molding powder obtained by a suspension polymerization process, a fine powder by an emulsification polymerization process and a recycled PTFE resin may be used. The recycled PTFE resin herein is a PTFE resin that is not a virgin material, and examples include types of a formed article by heating and pressurizing a molding powder or a fine powder at a melting point or more, or a powder formed by heating and sintering the processed product or the like and then pulverizing, and a powder formed by further irradiating this powder with γ-ray or electron beam, and the like.

As the PTFE resin, a recycled PTFE resin is preferably used. In order to improve the antiwearing property of the resin layer, it is preferable to use a PTFE resin having a high molecular weight; however, in general, in the case where a virgin material PTFE resin having a high molecular weight is used, injection molding may be inhibited by the thickening of the resin material depending on the conditions for the molding. In contrast, by using a recycled PTFE resin, the fiber formation that occurs during the molding can be prevented, and inhibition of the injection molding by thickening does not occur. Furthermore, since the PTFE resin is excellent in homogeneous dispersibility and has been heat-calcined, the PTFE resin is also excellent in antiwearing property. The molecular weight of the PTFE resin is preferably a number average molecular weight (Mn) of about 100,000 to 10,000,000.

The PTFE resin is incorporated in a powdery shape during the melt kneading in the injection molding of the resin material. The average particle diameter of the PTFE resin powder is preferably from 5 to 50 μm, more preferably from 9 to 15 μm. If the average particle diameter is lower than 5 μm, the powder flocculates to form a mass, and thus the sliding surface of the sliding bearing may not become a smooth plane. Furthermore, when the average particle diameter goes beyond 50 μm, unevenness may occur in the friction wearing property of the sliding bearing on the sliding surface.

Commercially available products of PTFE resins that can be used in the present invention include KTL-610, KTL-450, KTL-350, KTL-8N and KTL-400H manufactured by Kitamura, Ltd., Teflon (registered trademark) 7-J and TLP-10 manufactured by Du Pont-Mitsui Fluorochemicals Co., Ltd., Fluon G163, L150J, L169J, L170J, L172J and L173J manufactured by Asahi Glass Co., Ltd., Polyflon M-15 and Lubron L-5 manufactured by Daikin Industries Ltd., Hostaflon TF9205 and TF9207 manufactured by Hoechst AG, and the like.

In the resin material, the PTFE resin (B1) is contained by preferably more than 10% by mass and 40% by mass or less with respect to the total mass (A+B1) of the PE resin (A) and the PTFE resin (B1). If the PTFE resin (B1) is 10% by mass or less, the effect of improving antiwearing property is poor, and the antiwearing property may be poor in use at a PV value of more than 5 MPa·m/min. On the other hand, if the PTFE resin (B1) is more than 40% by mass, the injection moldability may be inhibited. The PTFE resin (B1) is preferably more than 10% by mass and 30% by mass or less, more preferably from 20 to 30% by mass.

In addition, in order to improve the friction wearing property and to decrease the linear expansion coefficient, a suitable filler can be added to the resin material that forms the resin layer of the sliding bearing. Examples include fibers such as glass fibers, carbon fibers, pitch-based carbon fibers, PAN-based carbon fibers, aramide fibers, alumina fibers, polyester fibers, boron fibers, silicon carbonate fibers, boron nitride fibers, silicon nitride fibers and metal fibers, minerals such as calcium carbide, talc, silica, clay and mica, inorganic whiskers such as aluminum borate whiskers and potassium titanate whiskers, various heat-resistant resins such as polyimide resins and polybenzoimidazole, and the like. In the case where a soft mating member may be attacked, the fibrous filler is not incorporated. Furthermore, known additives may be used in combination by contents at which the effect of the invention is not inhibited. For example, additives such as antistatic agents (carbon nanofiber, carbon black, graphite and the like), releasing agents, flame retardants, weather resistance improving agents, antioxidants and pigments may be suitably added, and the method for adding these is also not specifically limited.

The most preferable composition of the resin material in this embodiment is a composition substantially formed of two components: the PE resin (A), and a recycled PTFE resin that is the PTFE resin (B1) (pigments and the like may be incorporated as minute components). In this case, a fibrous filler and the like are not contained, and the recycled PTFE resin is not formed into fibers during molding, and thus the linear expansion coefficient that approximately goes along with the flow direction [for example: MD (molding direction)] of the resin material and the linear expansion coefficient that approximately goes along with the direction that is approximately orthogonal to the flow direction [for example: CD (cross molding direction)] of the resin material can be approximately the same. Furthermore, since a lubricating oil (oil-containing silica) and the like are not contained, the bending elasticity and bending strength can be improved more significantly as compared to the case when these are contained. By these, the peeling of the resin layer from the metal base material, the deformation and deviated wearing of the resin layer itself, and the like can be prevented during use of the sliding bearing under a high PV condition. The linear expansion coefficient here is, for example, an average linear expansion coefficient at R. T. (room temperature) to 60°C, and can be measured by a TMA (thermomechanical analysis) method.

In the resin material for forming the resin layer, the means for mixing and kneading the respective raw materials are not specifically limited, and the raw materials can be mixed by a Henschel mixer, a ball mixer, a ribbon blender, a lodige mixer or the like, and further melt-kneaded by a melt extruder such as a biaxial extruder to give pellets for molding. Furthermore, for the injection of a part of the materials of the filler, side feed may be adopted in melt kneading by a biaxial extruder or the like. Using these pellets for molding, for example, the resin layer is injection-molded by insert molding with the metal base material. By adopting injection molding, the resin layer is excellent in precise moldability and productivity, and the like. Furthermore, in order to improve physical properties, a treatment such as an anneal treatment may also be adopted.

By only using a PE resin as a resin base material for a resin material, even in the case where a porous silica impregnated with a silicone oil as a lubrication component was incorporated, the resin material was able to be used only under conditions at a PV value of up to about 3 MPa·m/min, and the antiwearing property was difficult to be satisfied at PV values more than this value. In contrast, by incorporating a non-injection-moldable fluorine resin in a PE resin at a predetermined ratio, the antiwearing property at a high PV value can be significantly improved.

The case where the resin material that forms the resin layer is a material containing the injection-moldable PE resin (A) as a major component and containing a non-injection-moldable UHMWPE (B2) at a predetermined amount will be explained below.

The PE resin (A) as the major component of the resin material is similar to that in the case where the above-mentioned PTFE resin (B1) is used.

The UHMWPE resin (B2) incorporated in the resin material is a non-injection-moldable UHMWPE resin. The UHMWPE resin is a resin obtained by increasing the molecular weight of a PE resin, which is generally from 20,000 to 300, 000, to from about 500,000 to 11,000,000, and has a low friction property. Furthermore, since the UHMWPE resin has a high molecular weight, the antiwearing property is fine. However, among the UHMWPE resins, a UHMWPE resin having a molecular weight of specifically 1,000,000 or more has an extremely high viscosity during melting and thus flows little, and thus molding cannot be conducted by a general injection molding process using this UHMWPE resin as a base resin, and generally, the material is molded by heat compression molding or ram extrusion molding, and then is processed into a desired shape by mechanical processing. Such non-injection-moldable UHMWPE resin (B2) has a lower friction property than that of the injection-moldable PE resin (A) and is also excellent in antiwearing property. It is preferable that this non-injection-moldable UHMWPE resin (B2) have a higher molecular weight than that of the PE resin (A).

The weight average molecular weight of the non-injection-moldable UHMWPE resin (B2) is preferably from 1,000,000 to 4,000,000. In a UHMWPE resin powder having the weight average molecular weight of lower than 1,000,000, the effect of improving the antiwearing property is poor. At more than 4,000,000, thin-wall moldability and the like are inhibited.

In the resin material, it is preferable that the non-injection-moldable UHMWPE resin (B2) be contained by from 5 to 30% by mass with respect to the total mass (A + B2) of the PE resin (A) and the non-injection-moldable UHMWPE resin (B2). If the content is lower than 5% by mass, the effect of improving antiwearing property is poor, and the resin material may be poor in antiwearing property during use at a PV value of more than 5 MPa·m/min. On the other hand, when the content is more than 30% by mass, the injection moldability may be inhibited. The content is preferably from 8 to 30% by mass, more preferably from 14 to 30% by mass.

In this embodiment, among UHMWPE resins, a non-injection-moldable UHMWPE resin is specifically used as not the major component of the resin layer but the filler for achieving the antiwearing property improvement. The non-injection-moldable UHMWPE resin (B2) and the PE resin (A) are similar kinds of resins, and both contain a main chain containing -CH$_2$-CH$_2$- units and are excellent in compatibility. By the melt kneading during the injection molding, the non-injection-moldable UHMWPE resin (B2) is dispersed in the PE resin (A) in a fully or partially compatible state.

At the time of the melt kneading during the injection molding of the resin material, the non-injection-moldable UHMWPE resin (B2) is incorporated in a powdery shape having an average particle diameter of from 10 to 200 μm. A powdery shape having an average particle diameter of from 10 to 50 μm is preferable. By incorporating in a microfine powdery shape, the thin-wall moldability of the resin layer is not inhibited and the compatibility is also excellent, and thus the antiwearing property is easily improved. Furthermore, powders of two or more kinds of the UHMWPE resins (B2) having different average particle diameters can also be incorporated. Furthermore, the powder shape of the non-injection-moldable UHMWPE resin (B2) is preferably spherical since the resin is excellent in kneading property. The average particle diameter is a value measured by a laser diffractometry.

Examples of commercially available products of the non-injection-moldable UHMWPE resin powder (B2) that can be used in the present invention include trade name Mipelon manufactured by Mitsui Chemicals, Inc. (spherical, weight average molecular weight: 2,000,000, density: 940 kg/m$^3$, average particle diameter: 25 to 30 μm), trade name Hi-Zex Million manufactured by Mitsui Chemicals, Inc. (weight average molecular weight: 1,150,000 to 4,000,000, density: 935 to 940 kg/m$^3$, average particle diameter: 120 to 160 μm) and the like.

In this embodiment, in order to further improve the sliding property of the resin layer, it is preferable to incorporate a porous silica (C), which is a filler having communicated pores, and a lubricant (D), in addition to the injection-moldable PE resin (A) and the non-injection-moldable UHMWPE resin (B2). Furthermore, a solid lubricant (E) can also be incorporated.

As the porous silica (C), a powder containing an amorphous silicon dioxide as a major component can be used. Examples include settable silica, which is an aggregate of microparticles each having a primary particle diameter of 15 nm or more, a spherical porous silica obtained by emulsifying an alkali silicate aqueous solution containing an alkali metal salt or an alkaline earth metal salt in an organic solvent, and gelling with carbon dioxide, and the like. In the present invention, a porous silica in which primary microparticles each having a particle diameter of from 3 to 8 nm are aggregated to form true-spherical silica particles is specifically preferable since it has communicated pores. These true-spherical silica particles have an average particle diameter of preferably from 0.5 to 100 μm, specifically preferably from 1 to 20 μm in the case where easiness of handling and sliding property are considered. Examples of the true-spherical porous silica include trade name Sunsphere manufactured by AGC Si-Tech Co., Ltd.

It is preferable that the true-spherical silica particles in which primary microparticles each having a particle diameter of from 3 to 8 nm are aggregated have properties of a specific surface area of from 200 to 900 m$^2$/g, preferably from 300 to 800 m$^2$/g, a fine pore volume of from 1 to 3.5 ml/g, a fine pore diameter of from 5 to 30 nm, preferably from 20 to 30nm, and an oil absorption amount of from 150 to 400 ml/100 g, preferably from 300 to 400 ml/100 g. Furthermore, it is preferable that, even when the spherical silica particles are immersed in water and then dried again, the above-mentioned fine pore volume and oil absorption amount retain 90% or more of the values before the immersion. Incidentally, the above-mentioned specific surface area and fine pore volume are values measured by a nitrogen adsorption method, and the oil absorption amount is a value measured in accordance with JIS K5101.

Furthermore, it is preferable that the inner and outer surfaces of the true-spherical silica particles be covered with silanol (Si-OH) since the lubricating oil and the like are easily retained inside. Furthermore, the porous silica can be subjected to an organic-based or inorganic-based surface treatment that is suitable for the base material. The particle shape of the above-mentioned porous silica is not specifically limited, and a non-spherical porous silica can also be used as long as it has an average particle diameter, a specific surface area, an oil absorption amount and the like that are within the scopes of those of the above-mentioned spherical silica particles. In view of the property to attack on a mating member and the kneading property, spherical and true-spherical particles are more preferable. Incidentally, the term "spherical" refers to a sphere having a ratio of a short diameter to a long diameter of from 0.8 to 1.0, and the term "true-spherical" refers to a sphere that is more closer to a true sphere than the above-mentioned spherical is.

As the lubricant (D), any substance having a lubrication effect such as a lubricating oil that is liquid at an ordinary temperature, an ionic liquid, or a grease containing a thickener in a lubricating oil, or the like can be used.

As the lubricating oil, any lubricating oils that are generally used for bearings can be used, and examples include mineral oils such as spindle oils, refrigerator oils, turbine oils, machine oils and dynamo oils, hydrocarbon-based synthetic oils such as polybutenes, poly-α-olefins, alkylnaphthalenes and alicyclic compounds, or ester oils of natural oils or fats with polyols, and phosphate esters, diester oils, polyglycol oils, silicone oils, polyphenyl ether oils, alkyldiphenyl ether oils, alkylbenzenes and non-hydrocarbon-based synthetic oils such as fluorinated oils, and the like. Furthermore, examples of the greases include greases containing these lubricating oils as a base oil, and using a soap-based thickener such as metal soaps and composite metal soaps, or a non-soap-based thickener such as benton, silica gel, urea compounds and urea-urethane compounds. In addition, a solid wax may also be incorporated.

Since a low friction is required in the sliding bearing of the present invention, it is preferable to use a silicone oil as the lubricant (D) among the above-mentioned ones. The silicone oil has affinity to the silanol groups remaining on the surface of the above-mentioned porous silica. As the silicone oil, either of a silicone oil having no functional group and a silicone oil having functional group (s) can be used.

In the case where the porous silica (C) and the lubricant (D) are incorporated in the resin material, the order of kneading is not specifically limited, and it is preferable to knead a porous silica and a lubricant in advance to impregnate the porous silica with the lubricant, and then to knead the product with other materials. It is also possible to conduct a method including kneading a base resin and a porous silica to give a formed article, and then impregnating the formed article with the lubricant. Furthermore, since the porous silica easily absorbs moisture and water, it is preferable to dry the porous silica before kneading. The means for drying is not specifically limited, and drying in an electrical furnace, vacuum drying or the like can be adopted. It is preferable to incorporate in the state of an oil-containing porous silica formed by impregnating a porous silica with a silicone oil or the like in advance, since the lubricating oil can be sufficiently retained in the porous silica and the kneading property is excellent.

In the resin material, it is preferable that the porous silica (C) and the lubricant (D) such as a silicone oil be incorporated by 25 to 50% by mass by total mass (C + D) with respect to the entirety of the resin material. 25 to 45% by mass is more preferable, 30 to 40% by mass is further preferable, and 35 to 40% by mass is the most preferable. It is preferable that the breakdown be (C) : (D) = about 1 : 3 in terms of mass. By incorporating the oil-containing porous silica by 25 to 50% by mass with respect to the entirety of the resin material, an excellent friction wearing property with excellent feeding of a lubricating oil can be retained.

Furthermore, it is also possible to conduct lubrication by impregnating an outer periphery part of the bearing formed of the above-mentioned metal base material with the above-mentioned lubricating oil, and allowing the lubricating oil to bleed on the sliding surface via the resin layer having the above-mentioned communicated pore structure.

As the solid lubricant (E), PTFE resins that are similar to those mentioned above, graphite, molybdenum disulfide, boron nitride, tungsten disulfide and the like can be used. In addition, fillers and additives can be suitably incorporated in a similar manner to that in the case where the above-mentioned PTFE resin (B1) is used.

The most preferable composition of the resin material in this embodiment is a composition substantially composed of the following four components: an injection-moldable PE resin (A), a non-injection-moldable UHMWPE resin (B2), a porous silica (C), and a lubricant (D) such as a silicone oil (may also contain pigments and the like as minute amount components). In this case, in the case where the porous silica (C) and the lubricant (D) such as a silicone oil are from 25 to 50% by mass by total mass (C + D) with respect to the entirety of the resin material, the total mass (A + B) of the PE resin (A) and the UHMWPE resin (B2) is from 50 to 75% by mass with respect to the entirety of the resin material.

The method for kneading and the method for molding the resin material are similar to those in the case where the above-mentioned PTFE resin (B1) is used.

There was a possibility of deterioration of antiwearing property under a condition of a high PV value by use of only a PE resin as the resin base material of the resin material. In contrast, by incorporating the PTFE resin or the non-injection-moldable UHMWPE resin as mentioned above as the non-injection-moldable resin, the antiwearing property at a high PV value can be improved. As a result, the sliding bearing of the present invention can be preferably utilized as an alternate product of a rolling bearing in many applications.

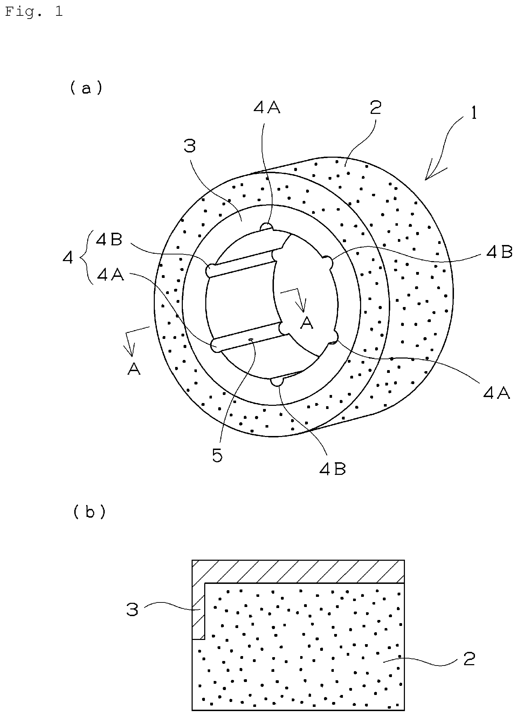

An example of the structure of the sliding bearing of the present invention will be explained with reference to Fig. 1.

Fig. 1 (a) shows a perspective view of a sliding bearing, Fig. 1 (b) shows a cross-sectional view at A-A, respectively. In a sliding bearing 1, a bearing outer periphery part 2 is formed of a metal base material, and a resin layer 3 has been insert-molded through a tunnel gate on the inner periphery side, which is to be a sliding part of the bearing outer periphery part 2, by using the above-mentioned resin material. The metal base material is the above-mentioned sinterless green compact. This resin layer 3 has a plurality of grooves 4 on the sliding surface of the bearing, and a gate mark 5 has been formed on the position of the bottom part of the groove 4. In Fig. 1 (a), the grooves 4 are formed as shaft direction grooves 4A and 4B on the radial sliding surface of the cylindrical bearing, the gate mark 5 is formed on the position of the bottom part of the shaft direction groove 4A, and the gate mark 5 is not formed on the shaft direction groove 4B. Furthermore, the grooves 4 can be formed on the radial sliding surface, the thrust sliding surface, or both the radial sliding surface and the thrust sliding surface of the cylindrical bearing.

The insert molding by undergoing a tunnel gate can be conducted by using a known mold structure. Since the tunnel gate mark is formed on the position of the bottom part of the groove, a gate treatment in the mold step is not necessary, and thus mass production is possible with a high precision.

The plural shaft direction grooves 4 are constituted by the grooves 4A each having a tunnel gate mark and the grooves 4B each having no tunnel gate mark. Furthermore, the shaft direction grooves 4 are disposed so that the distances from the both sides of the groove 4A to the groove 4B on the sliding surface of the bearing becomes equal. It is preferable that the grooves 4A and the grooves 4B be formed at equal intervals at the same number. By this disposition, a weld part during injection molding is formed in the groove 4B. Furthermore, generation of abnormal wearing can be suppressed by capturing a wearing powder by the grooves 4.

The bearing outer periphery part 2 is a tubular member that constitutes the outer periphery part of the sliding bearing, and is a member having a sliding part. This sliding part refers to, for example, either an inner diameter side sliding part for supporting a load in the radial direction or an outer diameter side sliding part, or both, and in the case where a load is supported also in the thrust direction, the sliding part also includes an end surface sliding part. For example, the sliding part is deemed as at least any one or more sliding parts from the inner diameter sliding part, the outer diameter sliding part and the end surface sliding part.

The resin layer 3 is insert-molded on the sliding part of the bearing outer periphery part 2 formed of the metal base material to thereby form a bearing surface that slides on the shaft member. During the molding, since the molten resin that forms the resin layer enters from the surface openings of the green compact to the inner fine pores of the surface layer part and then solidifies, the resin layer is tightly fixed on the surface of the base body by a kind of anchor effect. Therefore, peeling and dropping off of the resin layer due to the sliding on the shaft member are difficult to occur, and thus high durability can be obtained.

It is preferable that the surface opening rate on the surface of the metal base material (green compact) on which the resin layer is to be formed be set to, for example, more than 0% and 50% or less. If the surface opening rate is, for example, 0%, an anchor effect on the resin layer cannot be sufficiently obtained, whereas when the surface opening rate is more than 50%, the size accuracy and mechanical strength may not be retained. The term "surface opening rate" refers to the ratio (surface area ratio) of the total surface area of the surface openings which accounts for a unit surface area of the surface.

(The linear expansion coefficient of the resin material (unit: 1/°C) $\times$ (the wall thickness of the resin layer (unit: $\mu$m)) in the resin layer is preferably 0.15 or less, preferably 0.13 or less, further preferably 0.10 or less . In the case where the above-mentioned value is more than 0.15, the wall thickness or swelling of the resin layer also increases. At this time, since the outer diameter side of the resin layer is constrained by the metal base material, the resin layer cannot swell more than the swelled part of the metal and swells toward the inner diameter, and thus the inner diameter size decreases. Consequently, the gap with the shaft decreases, and thus hugging on the shaft may occur due to temperature rising depending on the initial setting of the gap. Furthermore, undue variation of the gap is not preferable since torque variation is caused, and it is preferable that the gap be small from the viewpoint of rotation accuracy.

Furthermore, the wall thickness of the resin layer at which molding is possible is about 50 $\mu$m, and if the wall thickness is thinner than this thickness, forming is difficult. Therefore, it is necessary that the resin expansion coefficient $\times$ wall thickness is 0.003 or more, preferably 0.01 or more, further preferably 0.015 or more.

It is preferable that the wall thickness of the resin layer be set to 0.1 to 0.5 mm (100 to 500 $\mu$m). Incidentally, "the wall thickness of the resin layer" in the present invention is the thickness (thickness in the diameter direction) of the surface part that does not enter into the metal base material thickness. If the wall thickness of the resin layer is lower than 0.1 mm, the durability during use for a long period may be poor. On the other hand, if the thickness of the resin layer is more than 0.5 mm, shrinkage may generate, and thus the size accuracy may decrease. Furthermore, the heat by the friction is difficult to escape from the friction surface to the metal base material, and thus the friction surface temperature increases. Furthermore, the amount of deformation by loading increases, and the true contact surface area on the friction surface also increases, and thus the friction force and friction heat generation may be high.

As the shape of the sliding bearing of the present invention, an optimal shape such as a radial shape, a flat plate shape, a flanged bush or the like can be selected depending on the shape of the sliding part. Furthermore, although an embodiment in which the bearing sliding surface has a plurality of grooves is explained in Fig. 1, the embodiment is not limited to this and may be an embodiment in which the grooves are not formed.

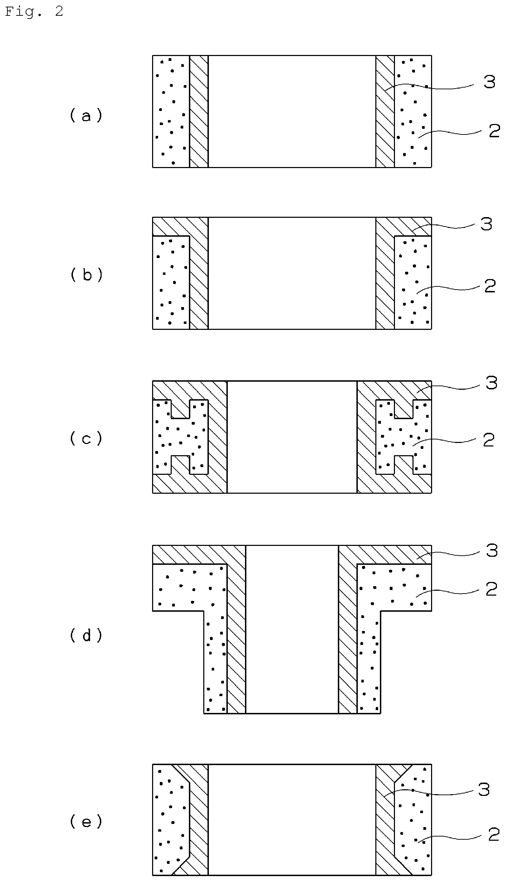

Furthermore, the position in the bearing outer periphery part on which the resin layer is insert-molded is not specifically limited as long as it is in the bearing outer periphery part. Examples include the cases as shown in Figs. 2(a) to (e). Fig. 2 (a) and (e) are such that the resin layer 3 is formed on the inner diameter radial sliding surface of the bearing outer periphery part 2 so as to support a load in the radial direction. Fig. 2 (b), (c) and (d) are such that the resin layer 3 is formed on the inner diameter radial sliding surface and the thrust sliding surface of the bearing outer periphery part 2 so as to support a load in the radial direction and the thrust direction. In addition, although not illustrated, where necessary, it is also possible to impart a resin layer to the outer diameter part of the bearing. In addition, as shown in Fig. 2 (c) and (e), it is also possible to adopt a shape of the resin layer having a grappling part that prevents the bearing outer periphery part from peeling from the resin layer.

In the case where a material containing the above-mentioned injection-moldable PE resin (A) as a major component and containing the recycled PTFE resin (B1) by a predetermined amount is used as the resin material of the resin layer, the linear expansion coefficient that approximately goes along with the flow direction (MD) of the resin material and the linear expansion coefficient that approximately goes along with the direction that is approximately orthogonal to the flow direction of the resin material (CD) are approximately the same. Therefore, also in the cases when the resin layer is formed by the shapes shown in Fig. 2(b) to (e), the stability of shape/size accuracy against change in bearing temperature is excellent, and the peeling, deformation, uneven wearing and the like of the resin layer can be prevented.

The sliding bearing of the present invention has a high precision and is excellent in sliding properties (low friction and low wearing), does not attack on soft mating members such as an aluminum shaft, and generation of abnormal noise can also be suppressed. Therefore, for example, the sliding bearing can be used as a bearing for supporting a rotation shaft of a rotation part in a developing part, a photosensitive part, a transfer part or the like in office machines such as copying machines and printers. Since the PE resin is used as the major component, the sliding bearing can be preferably utilized in mainly temperature atmospheres of 80°C or less.

Furthermore, since the sliding bearing can be used at a high PV value of 15 MPa·m/min or more, in a site that is used at a load and a velocity that have been conventionally handled by a rolling bearing, the site can be used by replacing with the rolling bearing.

The above-mentioned invention uses an unsintered green compact as the metal base material in the sliding bearing, on which an oxide film has been formed by means of a steam treatment or the like. Separately, it is also possible to provide other constitution to the metal base material while using the above-mentioned material containing an injection-moldable PE resin as the major component and containing a non-injection-moldable resin in the resin material. For example, it is also possible to use a sintered body formed by sintering a material that is similar to the above-mentioned green compact as this metal base material. A base material formed of a Fe-based sintered metal can be formed, for example, by compacting a raw material metal powder containing a predetermined amount of Fe (a small amount of binder may also be added so as to improve the moldability and mold releasability) into a predetermined shape, degreasing and calcining to give a sintered body, and subjecting the thus-obtained sintered body to a post treatment such as sizing as necessary.

Alternatively, a smelled metal base material may also be adopted as the metal base material. As the material for the smelled metal, iron, aluminum, an aluminum alloy, copper or a copper alloy is preferable. As the iron, carbon steels for general structures (SS400 and the like), soft steels (SPCC, SPCE and the like), stainless steels (SUS304, SUS316 and the like) and the like can be exemplified, and these irons may also be plated with zinc, nickel, copper or the like. Examples of the aluminum include A1100 and A1050; examples of the aluminum alloys include A2017 and A5052 (including alumite-treated products), examples of the copper include C1100, and examples of the copper alloys include C2700 and C2801, respectively. In the case where a smelled metal base material is used, it is preferable to roughen the joint surface (for example, Ra = 4 $\mu$m or more) so as to have an uneven shape by means of shot blast, a tumbler, a mechanical processing or the like for enhancing the tight adhesiveness with the resin layer during the insert molding. Furthermore, it is preferable to conduct a chemical surface treatment such as an acidic solution treatment (mixing with sulfuric acid, nitric acid, hydrochloric acid or the like, or with other solution), an alkaline solution treatment (mixed with sodium hydroxide, potassium hydroxide or the like, or with other solution) or the like to thereby form an uneven microfine shape on the joint surface. Since a microfine uneven shape formed by a chemical surface treatment has a complex steric structure such as a porous structure, an anchor effect is easily exerted, and thus strong tight adhesion becomes possible.

EXAMPLES

The embodiments of the present invention will be explained below by using specific Examples and the like, but the present invention is not limited to these.

[Evaluation of Metal Base Material]

Using a reduced iron powder as a material metal powder, an electrolyzed copper powder as a second metal component, and an amide wax-based powder lubricant as a lubricant for a powder compaction mold, the test pieces of Base material examples 1 to 13 were each prepared, on which tests were conducted. Each test piece has a ring shape, and the size is as follows.

Inner diameter: $\varphi$12
Outer diameter: $\varphi$20
Length: 7 mm

Base material examples 1 to 5

2 wt.% of an electrolyzed copper powder and 0.7 wt.% of a lubricant were added to a reduced iron powder and mixed, and a mold made of an alloy tool steel SKD11 is filled with the mixture, and the mixture was subjected to uniaxial pressing under various mold pressures, whereby five cylindrical green compacts having different green densities (g/cm$^3$) were obtained. Thereafter the lubricant component contained in each green compact was subjected to a degreasing treatment at 350°C for 90 minutes, and subjected to a steam treatment at 500°C for 40 minutes, whereby Base material examples 1 to 5 were obtained. The green densities (g/cm$^3$) of Base material examples 1 to 5 were as follows.

Base material example 1: 5.3
Base material example 2: 6.0
Base material example 3: 6.5
Base material example 4: 7.0
Base material example 5: 7.2

Base material examples 6 to 9

In order to confirm the effect of the difference in the treatment temperature of the steam treatment, a green compact having a green density of 6.5 g/cm$^3$, which corresponds to Base material example 3, was degreased at 350°C for 90 minutes in a similar manner to that for Base material examples 1 to 5, and subjected to a steam treatment for 40 minutes under the following four kinds of treatment temperatures, whereby Base material examples 6 to 9 were obtained.

Base material example 6: 350°C
Base material example 7: 400°C
Base material example 8: 450°C
Base material example 9: 550°C

Base material examples 10 and 11

In order to confirm the effect of the difference in the treatment time of the steam treatment, two base material examples with different treatment times were prepared. Specifically, a green compact having a green density of 6.5 g/cm$^3$, which corresponds to Base material example 3, was degreased at 350°C for 90 minutes in a similar manner to that for Base material examples 1 to 5, subjected to a steam treatment at 500°C for the following times, whereby Base material examples 10 and 11 were obtained.

Base material example 10: for 20 minutes
Base material example 11: for 80 minutes

Base material examples 12 and 13

In order to confirm the effect of the difference in the material, two base material examples with different materials were prepared. Specifically, each powder was subjected to uniaxial pressing so as to have a green density of 6.5 g/cm$^3$, in a similar manner to that for Base material example 3, was degreased at 350°C for 90 minutes in a similar manner to that for Base material examples 1 to 5, and subjected to a steam treatment at 500°C for 40 minutes. The compositions of the powders used in the respective Base material examples are as follows.
Base material example 12: a powder formed by adding 0.7 wit.% of a lubricant to only a reduced iron powder (Cu 0%)
Base material example 13: a powder formed by adding 0.7 wt. % of a lubricant and 20 wit. % of an electrolyzed copper powder to a reduced iron powder

Evaluation method

The mechanical properties of the obtained test pieces were evaluated based on the result of a radial crushing strength measurement conducted according to JIS Z 2507. The test apparatus used was Autograph AG-5000A manufactured by Shimadzu Corporation. The radial crushing strength refers to the strength of a cylindrical sintered body or a green compact obtained from a radial load by a predetermined method, and the radial load refers to a load at the time when cracking begins to occur when a cylindrical sintered body or a green compact is compressed at two planes that are in parallel with the shaft.

Table 1 shows the criteria for the judgement of the radial crushing strength. Specifically, as shown in the left column of the table, the radial crushing strengths (unit: MPa) are classified into four levels: lower than 50, 50 or more and lower than 100, 100 or more and lower than 150, and 150 or more, and are respectively represented by the symbols ×, Δ, ○ and ◎ in the right column.

[Table 1]

| Radial crushing strength, MPa | Judgement |
|---|---|
| Lower than 50 | × |
| 50 or more and lower than 100 | Δ |
| 100 or more and lower than 150 | ○ |
| 150 or more | ◎ |

Furthermore, using an image size measurement device (IM-6000, manufactured by Keyence Corporation), the inner and outer diameters of the test pieces were measured for before the steam treatment and after the steam treatment, respectively, and the percentage of the amount of change before and after the treatment with respect to the size before the treatment was calculated and deemed as a dimensional change rate. For the judgement of the dimensional change rate, the larger numerical value of the inner diameter or the outer diameter was adopted.

Table 2 shows the criteria of the judgment of the dimensional change rate. Specifically, as shown in the left column of the table, the dimensional change rates (unit: %) are classified into three levels: ± 0.1 or more, lower than ± 0.1 and lower than ± 0.05, and are respectively represented by the symbols Δ, ○ and ◎ in the right column.

[Table 2]

| Dimensional change rate, % | Judgement |
|---|---|
| ± 0.1 or more | Δ |
| lower than ± 0.1 | ○ |
| lower than ± 0.05 | ◎ |

Next, the evaluation results will be mentioned.

(a) Regarding green density

In order to confirm the effect of the green density on the radial crushing strength and the dimensional change rate, the 2% Cu-Fe green compacts of Base material examples 1 to 5 having different green densities were each subjected to a steam treatment at 500°C for 40 minutes. The results of the judgment of the radial crushing strength and the dimensional change rate in this case are shown in Table 3.

[Table 3]

| | Material | Green density g/cm$^3$ | Treatment | Treatment conditions (temperature, °C × retention time, min) | Judgement | |
|---|---|---|---|---|---|---|
| | | | | | Radial crushing strength | Dimensional change rate |
| Base material example 1 | Fe+2%Cu | 5.3 | Steam | 500×40 | Δ | ◎ |
| Base material example 2 | ↑ | 6.0 | ↑ | ↑ | ◎ | ○ |
| Base material example 3 | ↑ | 6.5 | ↑ | ↑ | ◎ | ◎ |

(continued)

|  | Material | Green density g/cm$^3$ | Treatment | Treatment conditions (temperature, °C × retention time, min) | Judgement | |
|---|---|---|---|---|---|---|
|  |  |  |  |  | Radial crushing strength | Dimensional change rate |
| Base material example 4 | ↑ | 7.0 | ↑ | ↑ | ◎ | Δ |
| Base material example 5 | ↑ | 7.2 | ↑ | ↑ | ○ | Δ |

The radial crushing strength was improved by the steam treatment in all of Base material examples 1 to 5. Specifically, the radial crushing strength was 100 MPa or more in Base material examples 2 to 5 each having a green density of 6.0 g/cm$^3$ or more, except that the radial crushing strength was lower than 100 MPa in Base material example 1 having a green density of 5.3 g/cm$^3$. However, the dimensional change rate was slightly deteriorated in Base material example 4 having a green density of 7.0 g/cm$^3$ and Base material example 5 having a green density of 7.2 g/cm$^3$. Furthermore, Base material example 5 is inferior to Base material example 4 having a green density of 7.0 g/cm$^3$ in radial crushing strength. Accordingly, it is understood that a higher green density is not necessarily preferable.

In light of the test results, it is preferable that the green density be set to be in the range of from 5.0 to 7.6 g/cm$^3$, preferably from 5.3 to 7.2 g/cm$^3$, more preferably 6.0 g/cm$^3$ or more and lower than 7.0 g/cm$^3$. Specifically, Base material example 2 and Base material example 3, each having a green density in the range of 6.0 g/cm$^3$ or more and lower than 7.0 g/cm$^3$, are sufficient as sliding bearing with respect to the radial crushing strength and to the dimensional change rate.

(b) Regarding treatment temperature

In order to confirm the effect of the treatment temperature of the steam treatment on the radial crushing strength and the dimensional change rate, steam treatments were conducted for 40 minutes on a 2% Cu-Fe green compact having a green density of 6.5 g/cm$^3$, with changing the treatment temperature. The results of the judgments of the radial crushing strength and the dimensional change rate in these cases are shown in Table 4.

[Table 4]

|  | Material | Green density g/cm$^3$ | Treatment | Treatment conditions (temperature, °C × retention time, min) | Judgement | |
|---|---|---|---|---|---|---|
|  |  |  |  |  | Radial crushing strength | Dimensional change rate |
| Base material example 6 | Fe+2%Cu | 6.5 | Steam | 350×40 | ○ | ◎ |
| Base material example 7 | ↑ | ↑ | ↑ | 400×40 | ○ | ◎ |
| Base material example 8 | ↑ | ↑ | ↑ | 450×40 | ◎ | ◎ |
| Base material example 3 | ↑ | ↑ | ↑ | 500×40 | ◎ | ◎ |
| Base material example 9 | ↑ | ↑ | ↑ | 550×40 | ○ | ○ |

Regarding the radial crushing strength, the radial crushing strength was 100 MPa or more in Base material example 6 wherein the treatment temperature was 350°C, Base material example 7 wherein the treatment temperature was 400°C and Base material example 9 wherein the treatment temperature was 550°C, and the radial crushing strength was 150 MPa or more in Base material example 8 wherein the treatment temperature was 450°C and Base material example 3 wherein the treatment temperature was 500°C. The maximum dimensional change rate was lower than ± 0.1% in any of Base material examples, and was lower than ± 0.05% in Base material examples 3, 8, 7 and 6 wherein the treatment temperature was 500°C or less. Incidentally, in Base material example 6 wherein the treatment temperature was 350°C, red rust ($Fe_2O_3$) partially generated, and thus only a $Fe_3O_4$ coating, which was originally intended, was not able to be formed. In Base material examples 7, 8, 3 and 9 wherein the treatment temperature was higher than that of Base material example 6, generation of red rust was not observed.

In light of the test results, it is preferable that the treatment temperature of the steam treatment be set to 400°C or more, preferably in the range of 400°C or more and 550°C or less, more preferably 450°C or more and 500°C or less. Regarding the treatment temperature, when the test results of Base material example 3 wherein the treatment temperature was 500°C and Base material example 9 wherein the treatment temperature was 550°C were compared, it is understood that a higher treatment temperature is not necessarily fine. Specifically, a finding that a treatment temperature that is lower than 500 to 560°C, which is deemed as the general treatment temperature of a conventional steam treatment, is preferable for either of the radial crushing strength and the dimensional change rate has been obtained.

(c) Regarding treatment time

In order to confirm the effect of the treatment time of the steam treatment on the radial crushing strength and the dimensional change rate, steam treatments were conducted on a 2% Cu-Fe green compact having a green density of 6.5 g/cm$^3$ at 500°C, with changing the treatment time. The results of the judgments of the radial crushing strength and the dimensional change rate in these cases are shown in Table 5.

[Table 5]

|  | Material | Green density g/cm$^3$ | Treatment | Treatment conditions (temperature, °C × retention time, min) | Judgement | |
|---|---|---|---|---|---|---|
|  |  |  |  |  | Radial crushing strength | Dimensional change rate |
| Base material example 10 | Fe+2%Cu | 6.5 | Steam | 500×20 | ◎ | ○ |
| Base material example 3 | ↑ | ↑ | ↑ | 500×40 | ◎ | ◎ |
| Base material example 11 | ↑ | ↑ | ↑ | 500×80 | ◎ | ◎ |

As is understood from Table 5, the radial crushing strength was 150 MPa or more, and the dimensional change rate was lower than ± 0.1% in any of Base material examples 10, 3 and 11. In light of these results, it is considered that a sufficient effect can be obtained when the steam treatment is conducted for a treatment time of 20 minutes or more.

(d) Regarding difference in materials

In order to confirm the effect of the material on the radial crushing strength and the dimensional change rate, using powders formed by adding a electrolyzed copper powder at different ratios to a reduced iron powder as a base material, green compacts each having a green density of 6.5 g/cm$^3$ were molded, and subjected to a steam treatment at 500°C for 40 minutes. The results of the judgments of the radial crushing strength and the dimensional change rate of the respective test pieces in these cases are shown in Table 6.

[Table 6]

| | Material | Green density g/cm$^3$ | Treatment | Treatment conditions (temperature, °C × retention time, min) | Judgement | |
|---|---|---|---|---|---|---|
| | | | | | Radial crushing strength | Dimensional change rate |
| Base material example 12 | Fe only | 6.5 | Steam | 500×40 | ◎ | ○ |
| Base material example 3 | Fe+2%Cu | ↑ | ↑ | ↑ | ◎ | ◎ |
| Base material example 13 | Fe+20 oCu | ↑ | ↑ | ↑ | ○ | ◎ |

The ratio of the electrolyzed copper powder to the reduced iron powder was 0 wt.% in Base material example 12, 2 wt.% in Base material example 3, and 20 wt.% in Base material example 13 , and the radial crushing strength was 100 MPa or more in any of these material examples. It is understood that, in these investigated compositions, a radial crushing strength of 100 MPa or more is achieved even when the iron ratio is decreased to 80 wt.%, and that the dimensional change rate is lower than ±0.1% in any of the compositions.

Next, the sliding bearings of Examples were produced by the following materials and molding method, and predetermined friction wearing tests were conducted.

1. Resin materials

Base resin;

(A) Injection-moldable PE resin [trade name: Lubmer L5000P manufactured by Mitsui Chemicals, Inc.] (density (ASTM D 1505): 966 kg/m$^3$, MFR (JIS K 7210 (190°C, 10 kgf)): 2 g/10 min)

Filler;

(B1) Recycled PTFE resin (non-injection-moldable fluorine resin) [trade name: KTL-610, manufactured by Kitamura, Ltd.] (average particle diameter (laser diffractometry): 12 $\mu$m)
(B2) Non-injection-moldable UHMWPE resin [trade name: Mipelon XM220, manufactured by Mitsui Chemicals, Inc.] (weight average molecular weight: 2,000,000, average particle diameter (laser diffractometry): 30 $\mu$m, mass specific gravity (ASTM D 1895): 400 kg/m$^3$, Shore hardness (ASTM D3418): 65D, spherical particles)
(C) Porous silica [trade name: Sunsphere H53, manufactured by AGC Si-Tech Co., Ltd.]
(D) Silicone oil [trade name: KF-96H, manufactured by Shin-Etsu Chemical Co., Ltd.]

A product obtained by incorporating these resin materials at the incorporation ratio shown in the following Table 8 was melt-kneaded in a biaxial extruder to prepare pellets for molding. Regarding Examples 2 to 4, a mixture with a mixed ratio of a porous silica to a silicone oil of 1 : 3 (based on mass) (an oil-containing porous silica) was obtained, and the mixture was incorporated at the incorporation ratio with respect to the entirety of the resin material shown in Table 8.

When a test piece was prepared by injection molding by using the resin material of Example 1 and the physical properties were evaluated, the bending strength (ASTM D790) was 40 MPa, the bending elasticity (ASTM D790) was 1,700 MPa, and the average linear expansion coefficient at R.T. to 60°C measured by a TMA process was 13 to 16 × 10$^{-5}$/°C for either of the linear expansion coefficient that approximately goes along with the flow direction (MD) of the resin material and the linear expansion coefficient that approximately goes along with the direction that is approximately orthogonal to the flow direction of the resin material (CD).

2. Outer ring formed of metal base material

Size: 8.5 mm in diameter (inner diameter), 16 mm in diameter (outer diameter), 5 mm (height)
Components: copper (0.5 to 2.5% by mass), others (3% by mass or less), iron (balance)

Production steps: material powder blending, forming, steam, anti-rusting and drying (the details of the production conditions and the like are the same as those in the above-mentioned Base material examples).

3. Conditions for insert molding

A sintered outer ring having the above-mentioned shape was inserted in a mold, and insert-molding was conducted under the following conditions by using the pellets for molding obtained above with going through a tunnel gate. The resin layer has a thickness of 0.25 mm.

Size of final product: 8 mm in diameter (inner diameter), 16 mm in diameter (outer diameter), 5 mm (height)

Temperature of mold: 120°C
Molding temperature: 250°C
Injection pressure: 100 to 140 MPa

4. Friction wearing test

A friction wearing test was conducted under the conditions in the following Table 7. The gap between the mating member shaft and the sliding bearing was 20 $\mu$m (measured at 20°C). Furthermore, the wearing coefficient was calculated by the following equation. The result of the friction wearing test is shown in Table 8.

[Table 7]

| Tester | Cantilevered radial tester, radial loading system: heavy bob | |
|---|---|---|
| Shaft of mating member | Without SUJ2 hardening thermal treatment (hardness HRA60 or less), surface roughness Ra 0.100 to 0.175 | |
| | | |
| PV value (MPa·m/min.) | 5 | 15 |
| Planar pressure P (MPa based on projected surface area) | 0.83 | 2.50 |
| Circumferential velocity V (m/min.) | 6.0 | |
| Test time | 30 hours | |
| Temperature | 25°C | |

Wearing coefficient

$$k = \delta/(F \times D)$$

k: wearing coefficient mm/(N $\times$ m) Definition: amount of increase of roundness per unit workload

F: radial load N

D: total sliding distance m

$\delta$: amount of wearing (amount of increase in roundness) mm $\delta = \delta1 - \delta0$

$\delta0$: average value of roundnesses (radius method) at two cross-sectional surfaces on inner diameter of sample bearing before test

$\delta1$: average value of roundnesses (radius method) at two cross-sectional surfaces on inner diameter of sample bearing after test

[Table 8]

| | Examples | | | |
|---|---|---|---|---|
| | 1 | 2 | 3 | 4 |
| Resin materials (% by mass) (A) Injection-moldable PE resin | 70 | 56 | 52 | 43 |
| (B1) PTFE resin | 30 | - | - | - |
| (B2)Non-injection-moldable UHMWPE resin | - | 5 | 9 | 18 |
| (C) Porous silica + (D) silicone oil | - | 39 | 39 | 39 |
| (B1 or B2)/[(A)+(B1 or B2)]×100(% by mass) | 30.0 | 8.2 | 14.8 | 29.5 |
| Properties Wearing coefficient(PV:5) | ○ | ○ | ○ | ○ |
| Wearing coefficient(PV:15) | ○ | ○ | ○ | ○ |
| Wearing coefficient: "○" is $10 \times 10^{-8}$ or less | | | | |

As shown in Table 8, the Examples each containing a non-injection-moldable resin in a PE resin can be injection-molded, and are excellent in antiwearing property in either of PV values of 5 and 15 MPa·m/min.

The sliding bearings of Reference Examples were produced by the following materials and molding method, and predetermined friction wearing tests were conducted.

1. Resin materials

The kinds of the base resins and fillers are similar to those in the cases shown in Table 8. A product formed by incorporating these resin materials at the incorporation ratio shown in Table 9 was melt-kneaded by a biaxial extruder to prepare pellets for molding. Regarding Reference Example 2, a mixture containing a porous silica and a silicone oil at a mixing ratio of 1 : 3 (based on mass) (an oil-containing porous silica) was obtained, and this mixture was incorporated in a resin and melt-kneaded by a biaxial extruder to prepare pellets for molding. Test pieces were prepared by injection molding by using respective resin materials, and the physical properties were evaluated. The results of the test methods and physical properties are described in Table 9 together.

[Table 9]

| | Reference Examples | | |
|---|---|---|---|
| | 1 | 2 | 3 |
| Resin materials (% by mass) (A) Injection-moldable PE resin | 70 | 60 | 90 |
| (B1) Recycled PTFE resin | 30 | - | 10 |
| (C) Porous silica + (D) silicone oil | - | 40 | - |
| Physical properties Bending strength(ASTM D790,MPa) | 40 | 24 | - |
| Bending elasticity(ASTM D790,MPa) | 1700 | 670 | - |
| Linear expansion coefficient(R.T.~60°C) (TMA method, $\times 10^{-5}$/°C) | MD:13~16 CD:13~16 | MD: 17 CD: 11 | - |

As shown in Table 9, it is understood that the resin material of Reference Example 1 has significantly higher bending strength and bending elasticity than those of the resin material of Reference Example 2, which contains an oil-containing porous silica. Furthermore, it is understood that the resin material of Reference Example 1 has approximately the same linear expansion coefficients in the flow direction (MD) and the direction orthogonal to the flow direction (CD).

2. Outer ring (sintered outer ring) formed of sintered metal base material

Size: 8.5 mm in diameter (inner diameter), 16 mm in diameter (outer diameter), 5 mm (height)

Component: copper (0.5 to 2.5% by mass), others (3% by mass or less), iron (balance)
Production step: material powder blend, forming, sintering, sizing, anti-rusting and drying

3. Conditions for insert molding

A sintered outer ring having the above-mentioned shape was inserted in a mold, and insert-molding was conducted under the following conditions by using the pellets for molding obtained above with going through a tunnel gate. The resin layer had a thickness of 0.25 mm. Any of Examples and Comparative Examples was able to be injection-molded.

Final product size: 8 mm in diameter (inner diameter), 16 mm in diameter (outer diameter), 5 mm (height)

Temperature of mold: 120°C
Mold temperature: 250°C
Injection pressure: 100 to 140 MPa

4. Friction wearing test

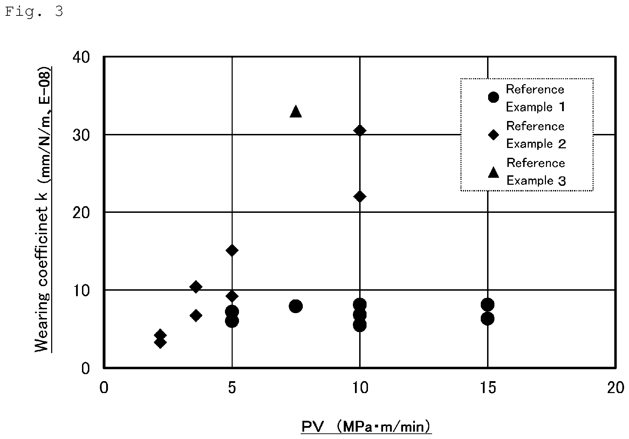

Friction wearing tests were conducted under the conditions of the above Table 7. The gap between the mating member shaft and the sliding bearing was set to 20 $\mu$m (measured at 20°C). Furthermore, the wearing coefficient was calculated by the above equation. The friction wearing tests were conducted plural times, and the relationship between the PV value and the wearing coefficient was investigated. The results are shown in Fig. 3. Fig. 3 is a drawing in which the PV values are plotted on the horizontal axis, and the wearing coefficients are plotted on the vertical axis.

As shown in Fig. 3, it is understood that, in Reference Example 2 that contains an oil-containing porous silica but does not contain a non-injection-moldable fluorine resin at all, the antiwearing property is difficult to be satisfied when the PV value is more than 3 MPa·m/min. Furthermore, at a high PV value, the variability in wearing coefficients in every measurement is also great. On the other hand, it is understood that Reference Example 1, which contains a predetermined amount of non-injection-moldable fluorine resin has a sufficient antiwearing property in any of the PV values of 5, 10 and 15 MPa·m/min, and the variation of the antiwearing property is small.

INDUSTRIAL APPLICABILITY

The sliding bearing of the present invention can keep the price low while maintaining a bearing property over a long period, and thus can be preferably utilized as, for example, a substituting article of a rolling bearing in office machines and the like.

REFERENCE SIGNS LIST

1    Sliding bearing
2    Bearing outer periphery part
3    Resin layer
4    Groove
5    Gate mark

**Claims**

1.   A sliding bearing having a metal base material, and a resin layer formed by using a resin material on a surface to be a sliding surface of the base material,
wherein the metal base material is an unsintered green compact formed by compacting a raw material powder containing a metal powder capable of forming an oxide film as a major raw material, and the oxide film has been formed between particles of the metal powder.

2.   The sliding bearing according to claim 1, wherein the green compact has a green density by a size measurement method in the range of from 5.0 to 7.6 g/cm$^3$.

3.   The sliding bearing according to claim 1, wherein the green compact has a radial crushing strength of more than 100 MPa.

4. The sliding bearing according to claim 1, wherein the oxide film has been formed by a steam treatment.

5. The sliding bearing according to claim 1, wherein the resin material is a material containing an injection-moldable polyethylene resin as a major component and containing a non-injection-moldable resin, and the resin layer has been integrally molded on the base material by using the material by injection molding.

6. The sliding bearing according to claim 5, wherein the non-injection-moldable resin is a fluorine resin, and the fluorine resin is contained in the resin material by more than 10% by mass and 40% by mass or less with respect to the total mass of the injection-moldable polyethylene resin and the fluorine resin.

7. The sliding bearing according to claim 6, wherein the fluorine resin is a recycled polytetrafluoroethylene resin.

8. The sliding bearing according to claim 6, wherein the fluorine resin has been incorporated in a powdery shape having an average particle diameter of from 5 to 50 $\mu$m in the resin material.

9. The sliding bearing according to claim 5, wherein the injection-moldable polyethylene resin has a MFR measured under a load of 10 kg at 190°C based on JIS K 7210 of from 1 to 30 g/10 min.

10. The sliding bearing according to claim 5, wherein the non-injection-moldable resin is a recycled polytetrafluoroethylene resin, and the recycled polytetrafluoroethylene resin is contained in the resin material by more than 10% by mass and 40% by mass or less with respect to the total mass of the injection-moldable polyethylene resin and the recycled polytetrafluoroethylene resin.

11. The sliding bearing according to claim 5, wherein the non-injection-moldable resin is a ultrahigh molecular weight polyethylene resin, and the ultrahigh molecular weight polyethylene resin is contained in the resin material by from 5 to 30% by mass with respect to the total mass of the injection-moldable polyethylene resin and the ultrahigh molecular weight polyethylene resin.

12. The sliding bearing according to claim 11, wherein the resin material contains a porous silica and a lubricant.

13. The sliding bearing according to claim 5, wherein the sliding bearing is a bearing that is used under a condition where a PV value obtained by multiplying a contact pressure (P) by a sliding velocity (V) is more than 5 MPa·m/min.

Fig. 1

( a )

4A  3  4A  2  1

4 { 4B
   4A

A

4B

A

5  4B

4A

( b )

3

2

Fig. 2

(a)

3

2

(b)

3

2

(c)

3

2

(d)

3

2

(e)

3

2

Fig. 3

## INTERNATIONAL SEARCH REPORT

International application No.

PCT/JP2015/053335

A. CLASSIFICATION OF SUBJECT MATTER
*F16C33/20*(2006.01)i, *B22F3/24*(2006.01)i, *B22F5/00*(2006.01)i

According to International Patent Classification (IPC) or to both national classification and IPC

B. FIELDS SEARCHED

Minimum documentation searched (classification system followed by classification symbols)
F16C33/20, B22F3/24, B22F5/00

Documentation searched other than minimum documentation to the extent that such documents are included in the fields searched
Jitsuyo Shinan Koho          1922–1996    Jitsuyo Shinan Toroku Koho    1996–2015
Kokai Jitsuyo Shinan Koho    1971–2015    Toroku Jitsuyo Shinan Koho    1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-514171 A  (Federal-Mogul Wiesbaden GmbH), 21 June 2012 (21.06.2012), paragraphs [0012] to [0055]; fig. 1a, 1b & US 2012/0008887 A1    & WO 2010/076307 A1 & EP 2370251 A1           & DE 102008055195 A & KR 10-2011-0099707 A   & CN 102271906 A | 1-13 |
| A | JP 2002-327750 A  (NTN Corp.), 15 November 2002 (15.11.2002), paragraphs [0009] to [0018]; fig. 1 (Family: none) | 1-13 |

[×] Further documents are listed in the continuation of Box C.          [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 April 2015 (24.04.15) | Date of mailing of the international search report<br>12 May 2015 (12.05.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/053335

C (Continuation). DOCUMENTS CONSIDERED TO BE RELEVANT

| Category* | Citation of document, with indication, where appropriate, of the relevant passages | Relevant to claim No. |
|---|---|---|
| A | JP 57-63602 A (Alliages Frittes SA),<br>17 April 1982 (17.04.1982),<br>page 2, upper left column, line 17 to page 3,<br>lower left column, line 14; fig. 1<br>& EP 45706 A1        & FR 2487235 A1<br>& CA 1182310 A1       & LU 83508 A<br>& IT 1194144 B | 1-13 |
| A | JP 2009-85234 A (NTN Corp.),<br>23 April 2009 (23.04.2009),<br>paragraphs [0021] to [0034]<br>(Family: none) | 1-13 |
| A | JP 2012-31965 A (Porite Corp.),<br>16 February 2012 (16.02.2012),<br>paragraphs [0014] to [0021]<br>& US 2012/0027635 A1    & CN 102345677 A<br>& KR 10-2012-0022518 A | 1-13 |

Form PCT/ISA/210 (continuation of second sheet) (July 2009)

**REFERENCES CITED IN THE DESCRIPTION**

**Patent documents cited in the description**

- JP H08303467 A